# EUROPÄISCHE PATENTSCHRIFT

(11) **EP 3 403 754 B1**
(45) Veröffentlichungstag und Bekanntmachung des Hinweises auf die Patenterteilung: **24.05.2023**
(21) Anmeldenummer: 18168364.0
(22) Anmeldetag: 20.04.2018
(51) Int. Cl.: B23H 3/04, B23H 9/10, B23H 11/00

(54) **VORRICHTUNG UND VERFAHREN ZUR ELEKTROCHEMISCHEN BEARBEITUNG EINES METALLENEN WERKSTÜCKS**
DEVICE AND METHOD FOR ELECTRO-CHEMICAL PROCESSING OF ONE METALLIC WORKPIECE
DISPOSITIF ET PROCÉDÉ D'USINAGE ÉLECTROCHIMIQUE D'UNE PIÈCE À USINER MÉTALLIQUE

(30) Priorität: 17.05.2017 DE 102017110733
(43) Veröffentlichungstag der Anmeldung: 21.11.2018
(73) Patentinhaber: Leistritz Turbinentechnik Nürnberg GmbH, 90459 Nürnberg (DE)
(72) Erfinder: Liebl, Cindy, 90530 Wendelstein (DE); Schmidt, Georg, 91126 Schwabach (DE)
(74) Vertreter: Lindner Blaumeier Patent- und Rechtsanwälte

(56) Entgegenhaltungen:
- DE-A1-102011 082 795
- DE-A1-102012 201 052
- DE-A1-102015 102 720
- DE-C1- 19 517 548
- US-A1- 2006 201 823

## Beschreibung

Die Erfindung betrifft eine Vorrichtung zur elektrochemischen Bearbeitung eines metallenen Werkstücks, umfassend mehrere von einer Ausgangsposition in eine Endposition über jeweilige Linearantriebseinheiten relativ zum Werkstück linear bewegbare Elektroden mit einer zum Werkstück gerichteten Abbildungsfläche gemäß dem Oberbegriff des Anspruchs 1. Eine solche Vorrichtung ist aus der DE 10 2011 082 795 A1 bekannt.

Zur Bearbeitung metallener Werkstücke, die aus einem elektrisch leitfähigen Material bestehen, wird, wenn komplexe Geometrien zu erzeugen sind, ein Verfahren zur elektrochemischen Abtragung (ECM - Electro Chemical Machining) verwendet. Ein Beispiel eines Werkstücks, das durch eine solche ECM-Bearbeitung hergestellt werden kann, ist ein Schaufelbauteil einer Strömungsmaschine, wie beispielsweise eine Triebwerksschaufel oder Ähnliches.

Bei einem ECM-Verfahren handelt es sich um ein spanloses Abbildungsverfahren. Eine hierfür dienliche Vorrichtung umfasst mehrere Elektroden, die linear mittels einer geeigneten Linearantriebseinheit von einer Ausgangsposition bei noch unbearbeitetem Werkstück in eine Endposition mit dann bearbeitetem Werkstück bewegbar sind. Diese bewegbaren Elektroden bilden entsprechende Kathoden, während das Bauteil die Anode bildet. Zwischen den zum Werkstück gerichteten Abbildungsflächen, die die dreidimensionale Endgeometrie, die das Werkstück aufweisen soll, definieren, und der Werkstoffoberfläche selbst ist während des gesamten Abbildungsverfahrens ein spaltartiger Fluidkanal gebildet, der um das Werkstück geschlossen umläuft, so dass ein Elektrolyt in diesem Kanal zirkulieren kann, der das gelöste Material aufnimmt und abtransportiert.

Eine solche Vorrichtung ist beispielsweise aus DE 10 2012 201 052 A1 bekannt. Die dort zur Herstellung von Schaufeln einer Strömungsmaschine ausgelegte Vorrichtung umfasst eine Mehrzahl an separaten Elektroden. Gesehen in Längsrichtung des Werkstücks, dort also der Schaufel, also über die Länge des Schaufelblattes zwischen dem Schaufelfuß und dem Deckband, sind bei der dortigen Vorrichtung drei unter verschiedenen Winkeln relativ zur Schaufeloberfläche bewegbare Elektroden vorgesehen, was es ermöglicht, mit den Elektroden auch unter beizubehaltende Hinterschneidungen zu fahren. In Umfangsrichtung gesehen, also um das Schaufelblatt selbst herum, sind insgesamt sechs Elektroden vorgesehen, wobei die die Schaufelblattober- und die Schaufelblattunterseite ausbildenden Elektroden, gesehen in Längsrichtung des Schaufelblatts, wiederum aus den beschriebenen drei Elektroden bestehen. Die um den Umfang des Schaufelblatts verteilt angeordneten Elektroden werden ebenfalls über entsprechende Linearantriebe linear zur Schaufeloberfläche bewegt, sie sind während der Bewegung voneinander beabstandet und treffen erst mit Erreichen der Endposition aufeinander, um in dieser Stellung die finale dreidimensionale Blattgeometrie abzubilden.

Da die um den Umfang verteilten Elektroden, zwischen denen entsprechende Dichtelemente vorgesehen sind, um den um das Schaufelblatt umlaufenden Fluidkanal zu schließen und abzudichten, während nahezu der gesamten Verstellbewegung bis zum Erreichen der Endposition voneinander beabstandet sind respektive erst aufeinander zulaufen, ergeben sich folglich zwischen den einzelnen Elektroden Bereiche, die nicht oder nur unzulänglich bearbeitet werden, resultierend aus dem Umstand, dass diesen Bereichen zwischen den voneinander beabstandeten Elektroden eben keine Elektrode respektive Abbildungsfläche zugeordnet ist bzw. gegenüberliegt. Entsprechende Materialabschnitte werden daher erst im letzten Moment bearbeitet und entfernt, wobei dies mitunter sogar dadurch erfolgt, dass feste Teile entfernt werden, deren Anbindung zum Werkstück erst kurz vor oder mit Erreichen der Endposition über die dann sehr eng aufeinander zubewegten Elektroden abgetrennt werden.

Es findet also eine relativ inhomogene Oberflächenbearbeitung statt, nachdem in Bereichen zwischen den benachbarten, voneinander beabstandeten und erst aufeinander zufahrenden Elektroden zunächst keine und auch mit fortschreitender Zustellung der Elektroden mitunter nur eine rudimentäre Bearbeitung stattfindet. Es bilden sich folglich am Werkstück zwangsläufig im Stoßbereich zweier benachbarter Elektroden Zonen aus, deren Bearbeitung anders respektive inhomogen ist zur Bearbeitung der benachbarten, von einer Elektrode während ihrer Zustellbewegung übergriffenen Flächen. Dies führt zu einer Inhomogenitäten aufweisenden Oberfläche des fertigen Werkstücks.

Schwierigkeiten ergeben sich insbesondere auch im Bereich der Schaufelblattkanten. Die Ober- und Unterseite des Schaufelblatts wird über großflächige Elektroden bearbeitet. Im Bereich der Kanten, wo also sehr enge Radien gegeben sind, sind folglich Zonen gegeben, die unter einem sehr spitzen Winkel bis hin zu einem parallelen Verlauf zur Bewegungsrichtung der benachbarten, die Ober- oder Unterseite bearbeitenden Elektrode stehen. Insbesondere im Kantenbereich ergeben sich die vorstehend beschriebenen Schwierigkeiten, dort im Stand der Technik nur mit einer sehr schmalen, den Kantenbereich bearbeitenden Elektrode gearbeitet wird, die ebenfalls erst unmittelbar mit Erreichen der Endposition mit der benachbarten Ober- oder Unterseitenelektrode zusammenläuft.

Der Erfindung liegt damit das Problem zugrunde, eine demgegenüber verbesserte Vorrichtung zur ECM-Bearbeitung von metallenen Bauteilen, insbesondere von Schaufelbauteilen einer Strömungsmaschine anzugeben.

Zur Lösung dieses Problems ist eine Vorrichtung gemäß dem Anspruch 1 vorgesehen.

Die Erfindung zeichnet sich dadurch aus, dass sich benachbarte Elektroden während der gesamten Verstellbewegung randseitig berühren und übergreifen bzw. überlappen, so dass sie mit ihren Abbildungsflächen, die aufgrund der Berührung im Überlapp aneinander anschießen, den um das Werkstück umlaufenden, geschlossenen und spaltartigen Fluidkanal begrenzen. Während der Verstellbewegung ändern die Elektroden, da sie mit unterschiedlichen Bewegungsrichtungen relativ zum Werkstück verstellt werden, zwar ihre Relativposition zueinander, sie bleiben jedoch permanent in Kontakt, wobei der Überlapp während der Verstellbewegung zunimmt, da sie sich aufgrund des Materialabtrags einander noch weiter annähern. Aufgrund der permanenten Berührung bleibt auch der Fluidkanal permanent über die Abbildungsflächen begrenzt und geschlossen.

Dies führt dazu, dass der gesamte zu bearbeitende Werkstückbereich, der von den Abbildungsflächen übergriffen ist, permanent übergriffen ist, das heißt, dass jedem Oberflächenpunkt des Werkstückbereichs, der von der kombinierten größeren Abbildungsfläche übergriffen ist, während der gesamten ECM-Bearbeitung eine Abbildungsfläche gegenüberliegt. Dies führt wiederum dazu, dass der gesamte übergriffene Werkstückbereich homogen bearbeitet werden kann, es ergeben sich folglich keine Kanten- oder Randbereiche am Übergang von einer Elektrode zur anderen, da aufgrund des Übergriffs respektive Überlapps auch in diesem Übergangsbereich kein Elektrodenspalt gegeben ist. Das fertig bearbeitete Werkstück zeigt demzufolge im über die Abbildungsflächen bearbeiteten Bereich ein homogenes Bearbeitungsbild, die Arbeitsqualität ist deutlich gegenüber bisherigen Arbeitsweisen verbessert.

Um zu gewährleisten, dass während der Verstellbewegung einerseits die Elektroden relativ zueinander trotz der Berührung beweglich sind, und dass andererseits die Abdichtung des Fluidkanals gegeben ist, weist eine zwischen zwei Elektroden vorgesehene Elektrode an der Abbildungsfläche zwei Gleitflächen auf mit denen sie auf jeweiligen äußeren Gleitflächen der beiden benachbarten Elektroden gleitet. Die miteinander zusammenwirkenden Elektroden weisen also entsprechende Gleitgeometrien auf, die ein flächiges Aneinanderliegen und flächiges Abgleiten aufeinander ermöglichen. Im Falle eines Schaufelbauteils sind beispielsweise zwei einander gegenüberliegende Elektroden vorgesehen, von denen die eine eine Abbildungsfläche zur Ausbildung der Oberseitengeometrie und die andere eine Abbildungsfläche zur Ausbildung der Unterseitengeometrie aufweist. Eine dritte, zwischen diesen beiden angeordnete Elektrode dient mit ihrer Abbildungsfläche dazu, den Kantenbereich des Schaufelbauteils auszubilden. Diese mittlere, dritte Elektrode weist an ihrer Abbildungsfläche einerseits den Abbildungsabschnitt auf, der in der Endgeometrie die Schaufelkantengeometrie definiert, andererseits aber auch zwei benachbart dazu angeordnete, der ganzen Abbildungsfläche eine im Wesentlichen V-förmige Geometrie verleihende Gleitflächen. Diese beiden Gleitflächen gleiten auf an der Elektrodenaußenseite der beiden benachbarten Elektroden ausgebildeten, quasi komplementären Gleitflächen ab. Aufgrund der flächigen Elektrodenauflage ergibt sich demzufolge einerseits ein permanenter Kontakt, der eine gute Führung erlaubt, andererseits aber auch ein dichter Kontakt, der den Fluidkanal in jeder Relativposition der Elektroden zueinander abdichtet. Die zumeist aus Messing gefertigten Elektroden erlauben ein einfaches, reibungsarmes Abgleiten.

Wird ein im Querschnitt langgestrecktes, flaches und gerundete Kanten aufweisendes Bauteil wie beispielsweise ein Schaufelbauteil gebildet, so sind demzufolge zwei einander gegenüberliegende Elektroden vorgesehen, die die Ober- und Unterseite des Werkstücks abbildende Abbildungsflächen aufweisen, während die wenigstens eine zwischen diesen angeordnete dritte Elektrode eine vorzugsweise den Kantenbereich des Werkstücks abbildende Abbildungsfläche aufweist. Hat jedoch das Werkstück eine andere Geometrie, so sind die Abbildungsflächen der oberen und unteren sowie der wenigstens einen seitlichen Elektrode naturgemäß anders ausgeführt, je nach der herauszuarbeitenden dreidimensionalen Endgeometrie.

Im Falle eines flachen, zwei seitliche Kanten aufweisenden Bauteils wie beispielsweise eines Schaufelbauteils ist es weiterhin zweckmäßig, wenn auch die zweite Kante eine gezielte Bearbeitung erfährt, sofern dies erforderlich ist. In diesem Fall ist es zweckmäßig, wenn eine der dritten Elektrode gegenüberliegende vierte Elektrode vorgesehen ist, die eine vorzugsweise den Kantenbereich des Werkstücks abbildende Abbildungsfläche aufweist. In diesem Fall kommen also vier Elektroden zum Einsatz, die im Falle eines Schaufelbauteils beispielsweise orthogonal zueinander beweglich sind. Die beiden die Kanten ausbildenden Elektroden, im Beispielsfall die dritte und die vierte Elektrode, übergreifen mit ihren entsprechenden Rändern respektive dortigen Gleitflächen die beiden die Ober- und Unterseite ausbildenden Elektroden, also die erste und die zweite Elektrode, an deren dortigen äußeren Gleitflächen. Diese Elektrodenanordnung respektive diese Art des Übergriffs ist jedoch auch dann zweckmäßig, wenn ein anderes Bauteil als ein Schaufelbauteil hergestellt werden soll.

Grundsätzlich können, unabhängig von der Geometrie des herzustellenden Werkstücks, also drei oder vier Elektroden vorgesehen sein.

Wird jedoch als Werkstück ein Schaufelblauteil einer Strömungsmaschine mit einem Schaufelabschnitt mit einem flachen, länglichen Querschnitt hergestellt, so bilden wie beschrieben die erste und die zweite Elektrode die flache Ober- und Unterseite mit ihren entsprechenden Abbildungsflächen, während die dritte und gegebenenfalls die vierte Elektrode den einen kleinen Radius aufweisenden Kantenbereich abbildende Abbildungsflächen aufweisen.

Kommen nur drei Elektroden zum Einsatz, was beispielsweise ausreichend ist, wenn ein Werkstück nur an drei Seiten zu bearbeiten ist, so ist es zweckmäßig, wenn die beiden äußeren Elektroden an einem den Fluidkanal begrenzenden, positionsfesten Kanalblauteil entlanggleiten. Dieses Kanalbauteil, das als Dichtelement fungiert, dient als Dicht- und Gleitfläche, an der die beiden äußeren Elektroden anliegen und längs welcher sie gleiten. Selbst bei einem Schaufelbauteil, bei dem die Schaufelkante, die an das Kanalbauteil anschießt, entweder nicht oder in einem nachgeschalteten Bearbeitungsschritt bearbeitet wird, ist eine derartige drei-Elektroden-Konfiguration zweckmäßig, wobei sich in der Endposition die beiden äußeren Elektroden, die an den Kanalbauteilen entlanggleiten, auch berühren können, so dass also auch in diesem Kantenbereich ein definierter Materialabtrag gegeben ist, ohne über eine vierte Elektrode eine definierte Kantengeometrie auszubilden.

Kommen jedoch vier Elektroden zum Einsatz, so übergreifen zwei einander gegenüberliegende Elektroden die beiden anderen Elektroden. Eine solche Geometrie ist bei der Herstellung eines Schaufelbauteils einer Strömungsmaschine dann besonders vorteilhaft, wenn beide Kantenbereiche einer Bearbeitung bedürfen und das Schaufelbauteil in einem einzigen Arbeitsvorgang dreidimensional gestaltet werden soll.

Aufgrund des Übergriffs der Elektroden ist es möglich, auch bei komplexer Werkstückgeometrie wie beispielsweise einer Schaufel einer Strömungsmaschine, die gewölbte und gegebenenfalls in Längsrichtung tordierte Flächen aufweist, ist es möglich, die Bewegungsachsen der Linearantriebseinheiten zweier benachbarter Elektroden unter einem Winkel von 90° zueinander anzuordnen, das heißt, dass bei drei oder vier Elektroden die Bewegungsachsen der Linearantriebseinheiten senkrecht zueinander verlaufen. Dies ist jedoch nicht zwingend. Denn je nach konkreter Geometrie des zu fertigenden Werkstücks kann es durchaus auch zweckmäßig sein, die Bewegungsachsen der Linearantriebseinheiten zwei benachbarter Elektroden unter einem Winkel kleiner oder größer 90° zueinander anzuordnen.

Besonders zweckmäßig ist es in diesem Zusammenhang, wenn die Linearantriebseinheiten zur Verstellung des Winkels zwischen den Bewegungsachsen zweier benachbarter Linearantriebseinheiten längs einer Kreisbahn bewegbar sind. Dies bietet bezogen auf die Vorrichtung selbst die Möglichkeit, die räumliche Anordnung der Bewegungsachsen der Linearantriebseinheiten und damit deren Position relativ zueinander variieren zu können, so dass ein hohes Maß an Flexibilität seitens der Vorrichtung gegeben ist. Da die Elektroden lösbare Elemente sind, die austauschbar mit der Linearantriebseinheit verbunden werden können, bietet sich so die Möglichkeit, die Vorrichtung für die Herstellung anders geformter Werkstücke umrüsten zu können. Denn es ist ohne weiteres möglich, die Elektroden auszutauschen und Elektroden zu positionieren, die anders geformte Abbildungsflächen aufweisen, sowie auch die Bewegungsachsen entsprechend zu verstellen, mithin also den Winkel zwischen zwei benachbarten Bewegungsachsen zu verändern. Hierüber ist ein hohes Maß an Flexibilität hinsichtlich der mit einer Vorrichtung herstellbaren Werkstücke respektive Abbildung der entsprechenden Oberflächengeometrien gegeben.

Die Verstellung der Linearantriebseinheiten erfolgt auf einfache Weise dadurch, dass diese längs einer Kreisbahn bewegbar sind. Um die Positionierung so genau wie möglich zu machen, wird bevorzugt jede Linearantriebseinheit über einen Stellmotor längs der Kreisbahn bewegt, um eine hochgenaue Positionierung und Arretierung in der jeweiligen Endposition zu ermöglichen.

Die Bewegung jeder Elektrode erfolgt wie beschrieben über eine separate Linearantriebseinheit. Diese umfasst bevorzugt eine über den Antriebsmotor antreibbare positionsfeste Gewindespindel und eine auf dieser laufende Mutter, die mit einem Elektrodenhalter gekoppelt ist. Es ist also ein Spindeltrieb realisiert, der eine hochgenaue Positionierung der Elektrode ermöglicht. Alternativ kann auch eine linear bewegliche, die Elektrode tragende Gewindespindel, die mit dem Antriebsmotor gekoppelt ist, vorgesehen sein.

Als Antriebsmotor wird bevorzugt ein Torquemotor verwendet, mit dem ebenfalls eine hochgenaue Positionierung möglich ist. Darüber hinaus bietet der Torquemotor auch die Möglichkeit, wenn die Vorrichtung in einem Pulsbetrieb arbeitet, mithin also der Strom und/oder die Spannung nicht permanent anliegt, sondern mit einer Frequenz von mehreren Hz gepulst wird, die Elektroden in entsprechender Frequenz zum temporären Öffnen respektive Vergrößern des Fluidkanals bei abgeschaltetem Strom und Spannung aus der Abbildungsposition kurz herauszufahren und anschließend bei anliegendem Strom und Spannung sofort wieder in die Abbildungsposition zu bewegen.

Zweckmäßigerweise ist eine Steuerungseinrichtung vorgesehen, die den Betrieb sämtlicher relevanter Komponenten der Vorrichtung steuert. Dabei ist der Betrieb über diese zentrale Steuerungseinrichtung bevorzugt derart steuerbar, dass die Elektroden ausgehend von der Ausgangsposition zunächst in einem ersten Betriebsmodus mit permanent anliegendem Strom und permanent anliegender Spannung in Richtung des Werkstücks bewegbar sind und nach Erreichen einer definierten Zwischenposition in einem zweiten Betriebsmodus intermittierend in einem Pulsbetrieb abwechselnd zum und vom Werkstück mit gepulst anliegendem Strom und gepulst anliegender Spannung bis in die Endposition bewegbar sind. Diese besonders zweckmäßige Erfindungsausgestaltung sieht demzufolge eine Vorrichtung vor, bei der innerhalb eines Arbeitsgangs ein und dasselbe Werkstück in zwei unterschiedlichen Betriebsmodi bearbeitbar ist, nämlich einem ersten Betriebsmodus mit permanent anliegendem Strom und Spannung, dem sogenannten "Generatormodus", sowie einem zweiten Betriebsmodus mit gepulst anliegendem Strom und Spannung, dem sogenannten "Pulsmodus" oder "PECM-Modus". Im erstgenannten Betriebsmodus liegt permanent Strom und Spannung über die Kathoden, also den Elektroden, und das Werkstück als Anode an, bei gleichzeitig bevorzugt konstantem, permanentem Vorschub der Elektroden. Dieser erste Betriebsmodus wird so lange durchgeführt, bis eine vorab definierte Zwischenposition erreicht ist, die über eine geeignete Messtechnik erfasst wird. Bis zum Erreichen der Zwischenposition ist bereits ein hinreichender Materialabtrag im ersten Betriebsmodus erfolgt. Sodann wird seitens der Steuerungseinrichtung automatisch auf einen zweiten Betriebsmodus umgeschaltet, der der Feinbearbeitung respektive Endbearbeitung der Oberfläche dient. In diesem gepulsten Modus liegt der Strom und die Spannung nur gepulst an, mit einer Frequenz von beispielsweise 5 - 15 Hz. Das heißt, er wird mit dieser Frequenz zu- und abgeschaltet. In diesem Pulsbetrieb wird, wenn der Strom und die Spannung anliegt, die jeweilige Elektrode noch näher an das Werkstück herangefahren, das heißt, dass der Spalt, verglichen zur Spaltbreite im ersten Betriebsmodus, verringert wird. Aufgrund des sehr schmalen Spaltes ist der Elektrolytfluss über dem Spalt reduziert bis nahezu vollständig eingeschränkt. Um jedoch die Abtragprodukte abführen zu können, wird, wenn der Strom- und Spannungspuls beendet ist und folglich der Strom und die Spannung abgeschaltet ist, zeitgleich mit dem Abschalten die Elektrode geringfügig zurückgefahren, so dass der Spalt temporär vergrößert wird und der mit Druck anstehende Elektrolyt durch den Spalt strömen kann, dabei die Abtragprodukte ausspülend. Sodann wird mit entsprechender Frequenz die Elektrode wieder in die Abtragsposition gefahren und der Strom und die Spannung angelegt etc. Dieser zweite Betriebsmodus wird so lange beibehalten, bis die Endgeometrie abgebildet ist.

Erfindungsgemäß ist es also möglich, während eines einzigen Bearbeitungsvorgangs respektive eines einzigen Bewegungszyklus von der Ausgangsposition in die Endposition durch entsprechende Ansteuerung der betroffenen Komponenten durch die Steuerungseinrichtung zwei unterschiedliche Betriebsmodi abzuarbeiten. Das heißt, dass die Vorrichtung sowohl im Generatorbetrieb als auch im Pulsbetrieb betrieben werden kann. Ein Umspannen des Werkstücks, also ein Wechsel der Vorrichtung, ist dabei mit besonderem Vorteil nicht erforderlich. Dies heißt, dass das Werkstück stets in ein und derselben Aufnahmeposition verbleibt, irgendwelche Positionierungstoleranzen, die bei einem Vorrichtungswechsel letztlich unvermeidbar sind, sind mit besonderem Vorteil nicht gegeben. Da in beiden Betriebsmodi auch dieselben Elektroden verwendet werden, also auch diese nicht gewechselt werden, ergibt sich auch dortseits keine Toleranz oder kein Abbildungsfehler. Die erfindungsgemäße Vorrichtung ermöglicht die Nutzung der Vorteile beider unterschiedlicher Betriebsmodi innerhalb eines einzigen Bearbeitungsvorgangs, verbunden mit einer hervorragenden, weil homogenen Bearbeitung der Werkstückoberfläche.

Zweckmäßig ist dabei jeder Elektrode eine mit der Steuerungseinrichtung kommunizierende Sensoreinrichtung zugeordnet, über die die Position jeder Elektrode entweder direkt oder indirekt erfassbar ist, wobei die Steuerungseinrichtung den Betrieb in Abhängigkeit der Sensorerfassung steuert. Die jeweilige Sensoreinrichtung erlaubt eine hochpräzise Positionserfassung, so dass stets die exakte Position der jeweiligen Elektrode bekannt ist. In Abhängigkeit der Elektrodenposition steuert die Steuerungseinrichtung je nach Betriebsmodus die entsprechenden Komponenten, also in jedem Fall die Torquemotoren, die für den Vorschub verantwortlich sind, wie auch den Generator, wenn dieser in seiner Leistung zu variieren ist. Im Pulsmodus wird sowohl der Generator als auch jeder Torquemotor zwingend gesteuert, wobei über die jeweilige Sensoreinrichtung das Erreichen der Endstellung pro Hub erfasst wird und dementsprechend der Generator gesteuert wird, der, wenn die Abbildungsposition erreicht ist, angeschaltet wird, und entsprechend der gesteuerten Taktfrequenz wieder abgeschaltet wird, woraufhin der Torquemotor die Elektrode wieder zum Öffnen des Fluidspalts zurückbewegt etc. Gegebenenfalls steuert die Steuerungseinrichtung auch eine Pumpe, über die der Elektrolyt gefördert wird, und die beispielsweise im Generatormodus permanent tätig ist, während sie im Pulsmodus gegebenenfalls ebenfalls gepulst betrieben wird.

In Weiterbildung der Erfindung kann eine Positioniereinrichtung zum automatischen Positionieren des Werkstücks in der Arbeitsposition in einer Arbeitskammer vorgesehen sein. Diese Positioniereinrichtung ermöglicht es, ein an ihr angeordnetes, zu bearbeitendes Werkstück hochpräzise, weil gegebenenfalls über eine entsprechende Sensorik oder Messtechnik erfasst, in der Arbeitskammer, in der der Abtrag erfolgt, zu positionieren. Das Werkstück verbleibt während der Bearbeitung an der Positioniereinrichtung, so dass auch dortseits nur ein einziges Mal aufgespannt respektive positioniert wird.

Die Positioniereinrichtung umfasst bevorzugt eine linear bewegbare Spindel, an der eine Aufnahmeeinrichtung zum Haltern des Werkstücks vorgesehen ist. Diese Spindel, die beispielsweise vertikal positioniert ist, ermöglicht ein Einfahren des Werkstücks von oben in die Arbeitskammer und nach Beendigung der Bearbeitung ein entsprechendes Herausfahren. Ihr zugeordnet ist natürlich auch hier ein entsprechender Antriebsmotor, beispielsweise wiederum ein Torquemotor, der eine hochgenaue Präzisierung ermöglicht.

Dabei ist es denkbar, dass die Spindel und damit das Werkstück während der Bewegung des Werkstücks in die Arbeitsposition eine reine Linearbewegung vornimmt respektive während das Werkstück in der Arbeitsposition ist in Ruhe ist. Alternativ ist es denkbar, dass die Spindel während der Verbringung des Werkstücks in die Arbeitsposition und/oder während sich das Werkstück in der Arbeitsposition befindet um ihre Längsachse drehbar ist. Dies ermöglicht es, bei einem Werkstück, das von Haus aus bereits eine um die Längsachse geringfügig tordierte Geometrie aufweist, das Werkstück, in diesem Fall beispielsweise ein Schaufelbauteil, zwischen die Elektroden mit einer geringfügigen Drehbewegung einzufädeln, also den seitens des Werkstücks gegebenen Twist durch die geringfügige Drehbewegung während der Einfahrbewegung auszugleichen. Auch während des Arbeitens ist es mitunter erforderlich, je nach abzubildender Geometrie, das Werkstück minimal zu drehen, beispielsweise um einen Winkel bis zu maximal 1°.

In Weiterbildung der Erfindung kann ein der Positioniereinrichtung zugeordnetes Magazin vorgesehen sein, in das mehrere zu bearbeitende Werkstücke einbringbar sind, die über die Positioniereinrichtung oder eine zugeordnete Wechseleinrichtung automatisch entnehmbar sind und gegebenenfalls auch dort nach Bearbeitung wieder einbringbar sind. Es ist also möglich, das Magazin mit der gewünschten Anzahl am Werkstück oder der maximal aufnehmbaren Anzahl an Werkstücken zu bestücken und sodann einen vollständig automatischen Betrieb anzustoßen, indem von der Entnahme der zu bearbeitenden Werkstücke bis zum Ablegen der bearbeiteten Werkstücke ein vollautomatischer Betrieb gegeben ist. Die Positioniereinrichtung mit ihrer Aufnahmeeinrichtung ist in der Lage, das jeweilige zu bearbeitende Werkstück automatisch zu greifen, zu positionieren und erneut bevorzugt wieder in das Magazin zu verbringen. Ist eine Wechseleinrichtung zwischen das Magazin und die Positioniereinrichtung geschaltet, so nimmt diese das Werkstück auf und übergibt es entsprechend. Auch dieser Betrieb wird bevorzugt über die zentrale Steuerungseinrichtung gesteuert.

Um eine stets gleiche Aufnahme der Werkstücke zu ermöglichen, ist zweckmäßigerweise jedes Werkstück in einem separaten Werkstückhalter, der über die Positioniereinrichtung respektive deren Aufnahmeeinrichtung automatisch greifbar ist, aufgenommen. Damit ist auch dortseits eine definierte, von Werkstück zu Werkstück gleiche Schnittstelle gegeben.

Neben der Vorrichtung selbst betrifft die Erfindung ferner ein Verfahren zur elektrochemischen Bearbeitung eines Werkstücks unter Verwendung einer Vorrichtung der vorstehend beschriebenen Art. Das Verfahren zeichnet sich erfindungsgemäß dadurch aus, dass die Elektroden während der Bearbeitung von der Ausgangsposition in Richtung des Werkstücks in die Endposition bewegt werden und gleichzeitig ein Fluid durch den radial über die Abbildungsflächen begrenzten Fluidkanal zwischen dem Werkstück und den Elektroden gepumpt wird.

Dabei kann die Steuerungseinrichtung den Betrieb der Vorrichtung derart steuern, dass die Elektroden ausgehend von der Ausgangsposition zunächst in einem ersten Betriebsmodus mit permanent anliegendem Strom und Spannung in Richtung des Werkstücks bewegt werden und nach Erreichen einer definierten Zwischenposition in einem zweiten Betriebsmodus intermittierend in einem Pulsbetrieb abwechselnd zum und vom Werkstück mit gepulst anliegendem Strom und Spannung bis in die Endposition bewegt werden.

Weitere Vorteile und Einzelheiten der vorliegenden Erfindung ergeben sich aus den im Folgenden beschriebenen Ausführungsbeispielen. Dabei zeigen:
- Fig. 1: eine erste Elektrodenanordnung einer ECM-Vorrichtung mit drei Elektroden in der Ausgangsposition,
- Fig. 2: die Elektrodenanordnung aus Fig. 1 in der Endposition,
- Fig. 3: eine zweite Elektrodenanordnung einer ECM-Vorrichtung mit vier Elektroden in der Ausgangsposition,
- Fig. 4: die Elektrodenanordnung aus Fig. 3 in der Endposition,
- Fig. 5: eine geschnittene Teilansicht einer ECM-Vorrichtung mit Darstellung der Elektroden und deren Linearantriebseinheiten,
- Fig. 6: eine Prinzipdarstellung einer ECM-Vorrichtung mit verschwenkbaren Linearantriebseinheiten, und
- Fig. 7: eine Prinzipdarstellung einer ECM-Vorrichtung mit sämtlichen Komponenten.

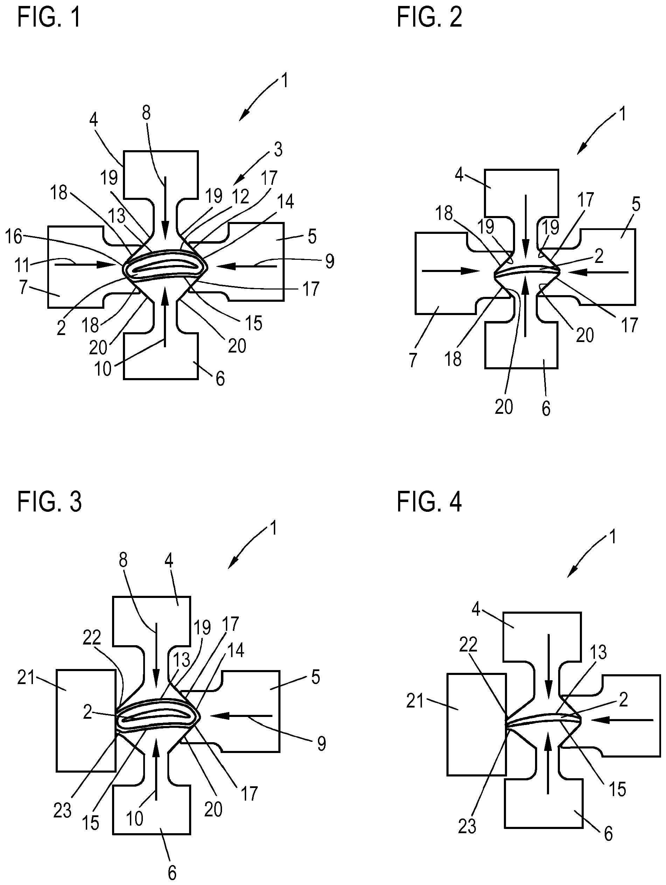

Fig. 1 zeigt als Teil einer erfindungsgemäßen Vorrichtung 1 zur elektrochemischen Bearbeitung eines metallenen Werkstücks 2 eine Elektrodenanordnung 3 umfassend im gezeigten Beispiel vier separate Elektroden 4, 5, 6, 7, die allesamt über separate, hier nicht näher gezeigte Linearantriebseinheiten relativ zum Werkstück 2 bewegbar sind. Die Elektroden 4 - 7 bilden Kathoden, während das Werkstück 2 die Anode bildet. Die Elektroden 4 - 7 sind über die Linearantriebseinheiten entlang der Bewegungsachsen 8, 9, 10, 11 linear bewegbar, wobei im gezeigten Ausführungsbeispiel die Bewegungsachsen 8 - 11 senkrecht zueinander stehen.

Im Betrieb ist ein permanenter, um das hier im Querschnitt gezeigte Werkstück 2 umlaufender, geschlossener spaltartiger Fluidkanal 12 vorgesehen, der beim gezeigten Ausführungsbeispiel ausschließlich über die Abbildungsflächen 13, 14, 15, 16 der Elektroden 4 - 7 radial respektive nach außen begrenzt und abgedichtet ist. Durch den Fluidkanal 12 strömt mit hinreichendem Druck senkrecht zur Darstellungsebene ein Elektrolyt, der der elektrochemischen Bearbeitung des Werkstücks 2 dient und über die gleichzeitig abgetragene Produkte aus dem Fluidspalt 12 transportiert werden.

Fig. 1 zeigt die Ausgangsstellung mit noch unbearbeitetem Werkstück 2. Ersichtlich greifen die Elektroden 4 - 7 ineinander respektive überlappen randseitig miteinander. Hierzu weisen die einander gegenüberliegenden Elektroden 5 und 7 randseitige ebene Gleitflächen 17 bzw. 18 auf, die außenseitig auf entsprechenden Gleitflächen 19, 20 der ebenfalls einander gegenüberliegenden Elektroden 4 und 6 berührend und abdichtend aufliegen. Es sind also an benachbarten Elektroden miteinander interagierende Gleitflächen gegeben. Die Elektroden 5 und 7 weisen, nachdem sie jeweils zwei benachbarte Elektroden 4 und 6 übergreifen, im Bereich der Abbildungsfläche quasi eine V-förmige Geometrie auf, wobei zwischen den Gleitflächen 17 bzw. 18 die eigentliche Abbildungsgeometrie, die die rundliche Kante des Werkstücks 2 abbilden soll, ausgebildet ist.

Jede Abbildungsgeometrie 13 - 16 ist abschnittsweise derart ausgeführt, dass sie in der Endposition das Negativ des Flächenabschnitts des fertig bearbeiteten Werkstücks 2, das mit der jeweiligen Elektrode 4 - 7 bearbeitet werden soll, zeigt. Im Falle der Elektroden 4 und 6 sind dies die Ober- und Unterseite des Werkstücks 2, das ein Schaufelbauteil für eine Strömungsmaschine ist. Im Falle der Elektroden 5 und 7 sind dies die entsprechenden, einen kleinen Radius aufweisenden beiden Kanten des Werkstücks 2.

Wie beschrieben zeigt Fig. 1 die Elektrodenanordnung 3 zu Beginn des eigentlichen ECM-Betriebs. Die Elektroden 4 - 7 sind relativ weit auseinandergefahren, der Grad der Überlappung ist noch nicht allzu groß. Sodann werden nach Zuschalten der Elektrolytförderung und Anlegen des Stromes in einem ersten Betriebsmodus, dem sogenannten "Generatorsenken" mit konstant anliegendem Strom und Spannung und linearem Verstellweg die Elektroden 4 - 7 in Richtung der Bewegungsachsen 8 - 11, also in Richtung der Pfeile, linear bewegt und folglich aufeinander zugeschoben. Aufgrund des anliegenden Stroms, der mehrere 1000 Ampere betragen kann, und der Spannung von 6 - 200 V kommt es, dem ECM-Verfahren entsprechend, zu einem Abtrag des Werkstückmaterials an seiner Oberfläche, das heißt, dass das Werkstückvolumen reduziert wird. Die jeweiligen Oberflächen werden durch die jeweiligen ihnen gegenüberliegenden Abschnitte der Abbildungsflächen 13 - 17 der jeweiligen Elektroden 4 - 7 geformt.

Die lineare Verstellbewegung bei konstantem Strom und konstanter Spannung im ersten Betriebsmodus (Generatorsenken) wird so lange beibehalten, bis eine definierte Senktiefe, also eine definierte Zwischenposition, erreicht ist. Dies wird über eine geeignete Messtechnik oder Sensorik erfasst. Sodann wird seitens der zentralen Steuerungseinrichtung automatisch in einen zweiten Betriebsmodus umgeschaltet, dem sogenannten PECM-Modus. In diesem wird der Strom und die Spannung nur gepulst mit einer Frequenz von beispielsweise 5 - 15 Hz angelegt.

Ein Strom- und Spannungspuls wird angelegt, wenn sich die jeweilige Elektrode in der Arbeitsposition befindet. Wird der Strom abgestellt, wird die Elektrode geringfügig vom Werkstück 2 entfernt, so dass der Fluidkanal 12 weiter aufgemacht wird, also die Spaltbreite etwas vergrößert wird und der Elektrolyt besser hindurchströmen kann. Sodann wird wiederum die jeweilige Elektrode zugestellt und in die Arbeitsposition verbracht, woraufhin wieder Strom und Spannung angelegt etc. Es ist also sowohl hinsichtlich des Stroms und der Spannung als auch hinsichtlich der Elektrodenpositionierung ein intermittierender Betrieb gegeben. Festzuhalten ist hierbei, dass die Spaltbreite im ersten Betriebsmodus, also beim Generator Senken, geringfügig größer ist als im zweiten Betriebsmodus, also beim PECM-Betrieb. Während im ersten Betriebsmodus die Spaltbreite ca. 0,2 - 0,3 mm beträgt, beträgt sie im zweiten Betriebsmodus beispielsweise 0,05 - 0,1 mm, wenn Strom und Spannung anliegt, mithin also abgetragen wird. Im zweiten Betriebsmodus wird die Spaltbreite durch das Auffahren der Elektroden beispielsweise auf 0,2 - 0,3 mm vergrößert.

Es erfolgen also zwei unterschiedliche Betriebsmodi innerhalb eines einzigen Bearbeitungsvorgangs, also einem Verstellvorgang von einer in Fig. 1 gezeigten Ausgangsposition in die in Fig. 2 gezeigte Endposition, in der, siehe Fig. 2, die Elektroden 4 - 7 weit zusammengefahren sind. Die Überlappungsbereiche der Gleitflächen 17, 18 und 19, 20 sind demzufolge deutlich vergrößert, verglichen mit der Ausgangsposition. Ersichtlich ergänzen sich die Abbildungsflächen 13 - 16 mit ihren die Endkontur des Werkstücks 2 nach der ECM-Bearbeitung definierenden Flächenabschnitten, also den Abschnitten im Bereich der Ober- und Unterseite sowie im Bereich der beiden Kanten, und definieren die eindeutige, am Werkstück 2 abgebildete dreidimensionale Endgeometrie. Diese Endgeometrie wird, nachdem die Elektroden 4 - 7 während des gesamten Verstellvorgangs von der Ausgangsstellung gemäß Fig. 1 in die Endstellung gemäß Fig. 2 einander berühren und den Fluidspalt 12 abdichten, ist über den gesamten Werkstückumfang äußerst homogen, da an jeder Stelle um den Umfang des Werkstücks 2 eine Abbildungsfläche der jeweiligen benachbarten Elektrode gegenüberliegt und demzufolge an jeder Position ein Materialabtrag erfolgt. Dieser an jeder Position erfolgende Materialabtrag ist während der gesamten Verstellbewegung, unabhängig vom Betriebsmodus, sichergestellt, so dass sich eine äußerst homogene Abtragung und damit auch ein äußerst homogenes Oberflächenbild erreichen lässt.

Die jeweiligen Elektroden 4 - 7 erstrecken sich über die gesamte Länge des zu bearbeitenden Werkstücks, im gezeigten Beispiel eines Schaufelteils einer Strömungsmaschine. Dieses ist am vorderen und hinteren Ende beispielsweise über einen Schaufelfuß sowie ein Deckband begrenzt, zwischen die die Elektroden 4 - 7 eintauchen.

Die Figuren 3 und 4 zeigen eine weitere Teilansicht einer erfindungsgemäßen ECM-Vorrichtung 1, wobei für gleiche Bauteile gleiche Bezugszeichen verwendet werden. Vorgesehen sind hier nur drei Elektroden 4, 5, 6 mit ihren jeweiligen Abbildungsflächen 13, 14, 15. Wie bei der Ausgestaltung gemäß der Figuren 1 und 2 übergreift die Elektrode 5 mit ihren Gleitflächen 17 die entsprechenden benachbarten Gleitflächen 19 und 20 der Elektroden 4 und 6.

Bei dieser Ausgestaltung ist nur eine kantenseitig abbildende Elektrode 5 vorgesehen. An der gegenüberliegenden Seite ist ein positionsfestes Kanalbauteil 21 vorgesehen, an dem die beiden Elektroden 4 und 6 mit entsprechenden, hier etwas andersartig geformten Kantenabschnitten 22, 23 gleitend und dicht anliegen.

Auch hier sind die Elektroden 4 - 6 über entsprechende Linearantriebseinheiten linear entlang der Bewegungsachsen 8, 9, 10 aufeinander zubewegbar, sie gleiten mit ihren Gleitflächen 17, 19 und 20 aufeinander ab, während die Elektroden 4, 6 mit ihren Kantenbereichen 22, 23 am Kanalbauteil 21 abgleiten. In der in Fig. 4 gezeigten Endposition hat sich der Grad der Überlappung der Elektrode 5 mit den Elektroden 4 und 6 wieder deutlich vergrößert, ähnlich wie beim Ausführungsbeispiel gemäß der Figuren 1 und 2. An der gegenüberliegenden Kantenseite des Werkstücks 2 liegen die Kantenabschnitte 22, 23 der Elektroden 4, 6 aneinander. Aufgrund der Geometrie der jeweiligen Abbildungsflächen 13, 15 der beiden Elektroden 4, 6 im Übergang zu den Kantenabschnitten 22, 23 ist es auch bei dieser nur drei Elektroden aufweisenden Ausgestaltung möglich, die Kante des Werkstücks 2 in diesem Bereich ebenfalls entsprechend einer vorgegebenen Geometrie gerundet auszubilden.

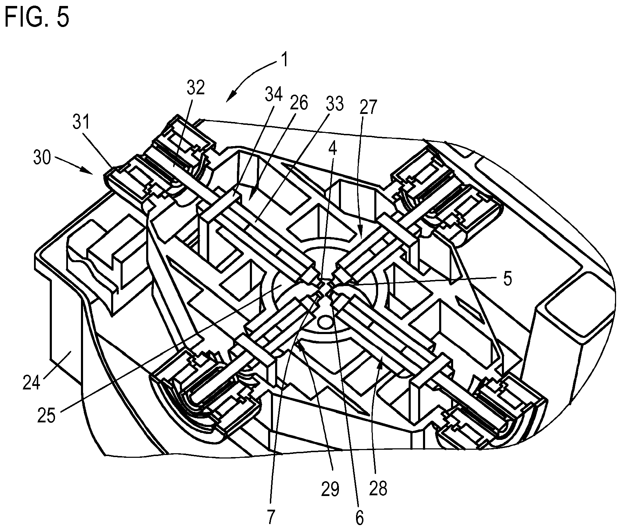

Fig. 5 zeigt in einer vergrößerten Detailansicht wiederum einen Ausschnitt aus einer erfindungsgemäßen ECM-Vorrichtung 1, mit einem Maschinengestell 24, an dem eine Arbeitskammer 25 vorgesehen ist, in der die eigentliche ECM-Bearbeitung stattfindet. Gezeigt sind exemplarisch die vier Elektroden 4, 5, 6, 7 sowie die entsprechenden Linearantriebseinheiten 26, 27, 28, 29.

Jede Linearantriebseinheit 26 - 29, von denen nachfolgend nur eine beschrieben wird, nachdem die Antriebseinheiten dem Grunde nach identisch aufgebaut sind, umfasst einen Antriebsmotor 30 in Form eines Torquemotors 31 umfassend eine Antriebsspindel 32, mit der ein linear verschiebbarer Elektrodenhalter 33 verbunden ist. Die ein Außengewinde aufweisende Antriebsspindel wird über den Torquemotor 31 gedreht. Sie ist in einer positionsfesten Mutter 34 geführt und mit dem Elektrodenhalter 33 gekoppelt. Der Elektrodenhalter 33 wird bei einer Spindelrotation mit der Spindel 32 linear bewegt, je nach Spindeldrehrichtung. Hierüber erfolgt die jeweilige Zustellung der einzelnen Elektroden 4 - 7. Der Aufbau respektive die Konfiguration der gezeigten Linearantriebseinheiten 26 - 29 ist lediglich exemplarischer Natur. Es sind auch andere Linearbewegungskonzepte denkbar, ihnen gemein sollte jedoch ein Torquemotor 31 sein, der einen sehr schnellen, weil mit höherer Frequenz für den PECM-Betrieb erforderlichen intermittierenden Stellbetrieb ermöglicht, und der andererseits auch eine hochpräzise Positionierung erlaubt.

Sämtliche Linearantriebseinheiten 26 - 29 sind separat ansteuerbar, das heißt, dass die übergeordnete Steuerungseinrichtung jeden Torquemotor 31 separat ansteuert, so dass in optimaler Weise die Elektrodenbewegung erfolgen kann.

Bei der Ausgestaltung gemäß Fig. 5 sind die Linearantriebseinheiten 26 - 29 positionsfest. Die Torquemotoren 31 sind also unbeweglich, lediglich die Spindeln 32 und die Elektrodenhalter 33 sind linear beweglich geführt. Das heißt, dass der Winkel zwischen den Bewegungsachsen der Linearantriebseinheiten 26 - 29 fest ist, er beträgt wie exemplarisch in Fig. 1 gezeigt 90°.

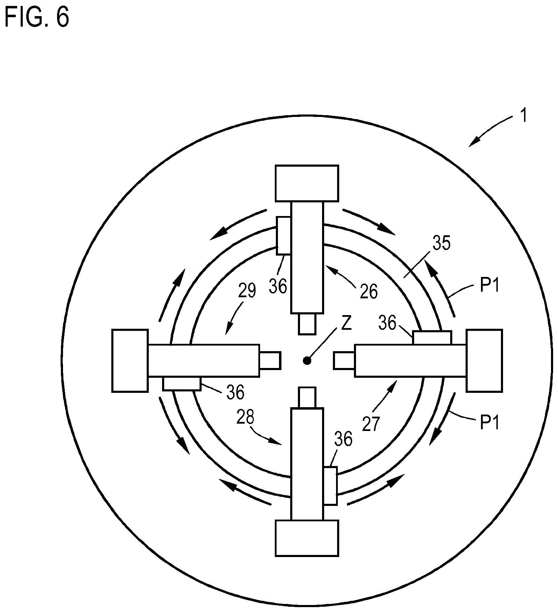

Um bezüglich des Achswinkels eine Variationsmöglichkeit zu geben, ist in Fig. 6 eine Teilansicht einer Vorrichtung 1 gezeigt, bei der die einzelnen Linearantriebseinheiten 26 - 29 längs einer Kreisbahn, wie durch die Pfeile P1 dargestellt, bewegbar sind. Hierzu ist beispielsweise eine kreisförmige Führungsbahn 35 vorgesehen, auf der die Linearantriebseinheiten 26 - 29 über separate Schlittenbauteile oder Ähnliches, die hier nicht näher gezeigt sind, gelagert sind. Sie sind um das Zentrum Z, das in der Mitte der Arbeitskammer 25 liegt, drehbar. Dies geschieht exemplarisch über einen jeweiligen Stell- oder Antriebsmotor 36, vorzugsweise in Form eines Torquemotors oder Servomotors, den jede der dort gezeigten Linearantriebseinheiten 26 - 29 aufweist.

Hierüber ist es möglich, den Winkel der Linearantriebseinheiten 26 - 29 relativ zueinander zu verstellen, wenn dies aus Gründen der Werkstückgeometrie respektive der Elektrodengeometrie der austauschbaren Elektroden erforderlich ist.

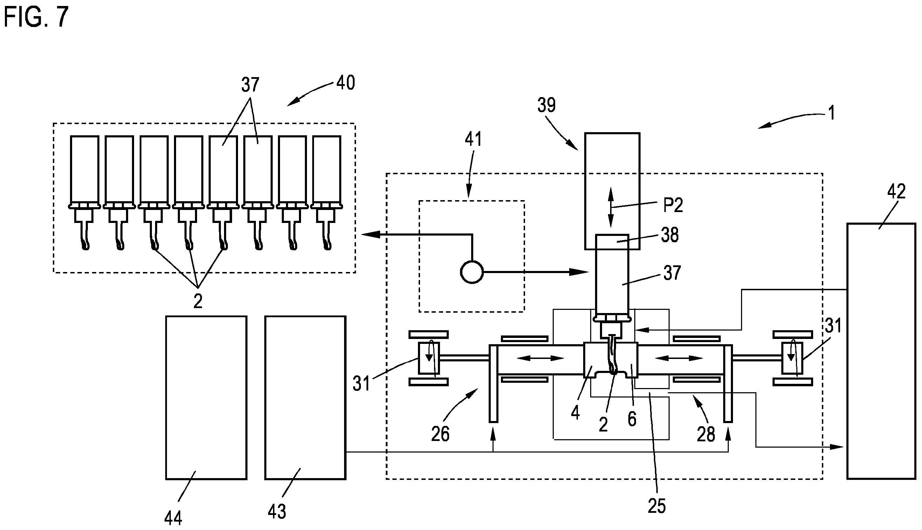

Fig. 7 zeigt schließlich eine Prinzipdarstellung einer erfindungsgemäßen Vorrichtung 1 zur Durchführung des ECM-Verfahrens. Gezeigt sind hier lediglich exemplarisch die beiden Linearantriebseinheiten 26, 28, die beiden anderen stehen orthogonal dazu. Dargestellt sind auch die beiden zugeordneten Elektroden 4, 6 sowie das dazwischen befindliche Werkstück 2.

Das Werkstück 2 ist in einem Werkstückhalter 37 aufgenommen bzw. eingespannt, der von einer Aufnahmeeinrichtung 38 einer Positioniereinrichtung 39 gegriffen ist respektive dort eingespannt ist. Die Positioniereinrichtung 39 weist eine entsprechende, nicht gezeigte Spindel auf, an der die Aufnahmeeinrichtung 38 angeordnet ist. Mit ihr ist es möglich, wie durch den Doppelpfeil P2 dargestellt, das Werkstück 2 in und aus der Arbeitskammer 25 zu bewegen.

Dabei ist es denkbar, dass die Spindel respektive die Aufnahmeeinrichtung 38 während des Bewegens des Werkstücks 2 in die Arbeitsposition und/oder, während sich das Werkstück in der Arbeitsposition befindet, um ihre Längsachse zu drehen, so dass bei einem entsprechenden Twist des Werkstücks 2 dieses zwischen die Elektroden 4 - 7 gefädelt werden kann.

Der Positionierungseinrichtung 39 zugeordnet ist des Weiteren ein Magazin 40 sowie eine optimale, hier gestrichelt dargestellte Wechseleinrichtung 41. In dem Magazin 40 sind eine Mehrzahl an zu bearbeitenden Werkstücken 2, die bereits fest an entsprechenden Werkstückhaltern 37 angeordnet sind, aufgenommen. Dieses Magazin 40 kann von der die Vorrichtung 1 betreuenden Person vorab bestückt werden. Im Betrieb greift z. B. die Wechseleinrichtung 41 den entsprechenden Werkstückhalter 37 des nächsten zu bearbeitenden Werkstücks und verbringt diesen zur Positioniereinrichtung 39, die diesen mit der Aufnahmeeinrichtung 38, die mit der nicht näher gezeigten Spindel gekoppelt ist, greift. In umgekehrter Weise erfolgt der Wechselbetrieb eines bearbeiteten Werkstücks 2 nach der Bearbeitung, dieses wird über die Wechseleinrichtung 41 der Positioniereinrichtung 39 wieder entnommen und in das Magazin 40 verbracht.

Gezeigt ist des Weiteren eine Förder- und Versorgungseinrichtung 42, über die der für den ECM-Betrieb erforderliche Elektrolyt in einem geschlossenen Kreislauf der Arbeitskammer 25 zu- und von dieser abgeführt wird. Die Einrichtung 42 umfasst eine geeignete Pumpe, die den benötigten Arbeitsdruck zur Verfügung stellt.

Dargestellt ist des Weiteren die Energieversorgung 43, umfassend einen Generator, über die die Elektroden 4 - 7, die die Kathoden bilden, sowie das Werkstück 2, das die Anode bildet, mit dem benötigten Arbeitsstrom in Höhe von mehreren 100 bis mehreren 1000 Ampere versorgt werden.

Des Weiteren gezeigt ist eine zentrale Steuerungseinrichtung 44, die den Betrieb sämtlicher Arbeitskomponenten der erfindungsgemäßen Vorrichtung 1 steuert, also der Stromversorgungseinrichtung 43 respektive des Generators, der Einrichtung 42 zur Elektrolytversorgung, der Positioniereinrichtung 39 sowie der Wechseleinrichtung 41. Ihr zugeordnet sind entsprechende Sensoreinrichtungen, die entsprechende Betriebs- oder Positionsparameter etc. ermitteln und auf Basis welcher die Steuerungseinrichtung 44 an den Betrieb steuert. Die Mess- oder Sensoreinrichtungen umfassen entsprechende Sensoren zur hochgenauen Erfassung der jeweiligen Elektrodenposition, was erforderlich für den Ansteuerungsbetrieb der Torquemotoren 31 in beiden Betriebsmodi ist. Darüber hinaus wird hierüber auch die entsprechende Positionierung der Elektroden in der Arbeits- oder der ausgefahrenen Positionen im PECM-Betrieb etc. gesteuert. Gleiches gilt natürlich in Bezug auf die Positioniereinrichtung 39, hier wird die entsprechende Einnahme der Endposition des Werkstücks 2, also der Arbeitsposition, erfasst, wie natürlich auch entsprechende Positionierungen oder Vorgangsabschlüsse im Rahmen des Teilewechsels etc.

Im PECM-Betrieb ist des Weiteren eine hochpräzise Ansteuerung der Stromversorgung 43, also des Generators, erforderlich, da dieser nur gepulst wird. Die Pulsfrequenz des Generators 43, damit aber auch die Frequenz, mit der die Torquemotoren 31 die Elektroden ein- und ausfahren, liegt im Bereich von üblicherweise 5 - 10 Hz, kann aber auch höher sein, beispielsweise bis zu 15 Hz.

Insbesondere ist die Steuerungseinrichtung 44 dafür verantwortlich, den Betriebsmodus der erfindungsgemäßen Vorrichtung 1 vom ersten Betriebsmodus, in dem bei permanent und üblicherweise konstant anliegendem Strom die Elektroden 4 - 7 bevorzugt konstant zugestellt werden, auf den zweiten Betriebsmodus, dem PECM-Betrieb, in dem ein gepulster Materialabtrag erfolgt, umzuschalten. Der Trigger, der zum Umschalten vom ersten in den zweiten Betriebsmodus dient, ist das Erfassen einer entsprechenden Position oder Zwischenposition, die die Elektroden 4 - 7 einnehmen, und die anzeigt, dass über die jeweilige Elektrode hinreichend Material abgetragen wurde. Im ersten Betriebsmodus erfolgt somit quasi eine Grobbearbeitung mit relativ hohem Materialabtrag, während im zweiten, gepulsten PECM-Modus die Feinbearbeitung bis zur Endkontur erfolgt. Dies alles innerhalb einer einzigen Vorrichtung durch die Betriebsmodusumschaltung, sowie in einem einzigen Bewegungszyklus und in einer einzigen Aufspannung, das heißt, dass das Werkstück 2 trotz Durchführung zweier unterschiedlicher Bearbeitungsmodi stets in ein und derselben Position verbleibt, mithin also nicht umzuspannen ist. Dies gilt natürlich auch für die Elektroden 4 - 7, die ebenfalls während beider Betriebsmodi positionsgleich ohne Wechselvorgang eingesetzt werden.

## Patentansprüche

1. Vorrichtung zur elektrochemischen Bearbeitung eines metallenen Werkstücks, umfassend mehrere von einer Ausgangsposition in eine Endposition über jeweilige Linearantriebseinheiten relativ zum Werkstück linear bewegbare Elektroden mit einer zum Werkstück gerichteten Abbildungsfläche, wobei wenigstens drei Elektroden (4, 5, 6, 7) vorgesehen sind, die um den Umfang des Werkstücks (2) versetzt angeordnet sind und die Elektroden (4, 5, 6, 7) mit ihren Abbildungsflächen (13, 14, 15, 16) einen um den Umfang des Werkstücks (2) geschlossen umlaufenden Fluidkanal (12) begrenzen, **dadurch gekennzeichnet, dass** sich benachbarte Elektroden (4, 5, 6, 7) während der gesamten Verstellbewegung von der Ausgangs- in die Endposition randseitig berühren und abschnittsweise übergreifen, wobei eine zwischen zwei Elektroden (4, 6) vorgesehene Elektrode (5, 7) an der Abbildungsfläche (14, 16) zwei Gleitflächen (17, 18) aufweist, mit denen sie auf jeweiligen äußeren Gleitflächen (19, 20) der beiden benachbarten Elektroden (4, 6) gleitet.

2. Vorrichtung nach Anspruch 1, **dadurch gekennzeichnet, dass** zwei einander gegenüberliegende Elektroden (4, 6) die Ober- und die Unterseite des Werkstücks (2) abbildende Abbildungsflächen (13, 15) aufweisen, während die wenigstens eine zwischen diesen angeordnete dritte Elektrode (5) eine vorzugsweise den Kantenbereich des Werkstücks (2) abbildenden Abbildungsfläche (14) aufweist.

3. Vorrichtung nach Anspruch 1 oder 2, **dadurch gekennzeichnet, dass** eine der dritten Elektrode (5) gegenüberliegend angeordnete vierte Elektrode (7) vorgesehen ist, die vorzugsweise ebenfalls eine den Kantenbereich des Werkstücks (2) abbildende Abbildungsfläche (16) aufweist.

4. Vorrichtung nach Anspruch 2 oder 3, **dadurch gekennzeichnet, dass** das Werkstück (2) ein Schaufelbauteil einer Strömungsmaschine mit einem Schaufelabschnitt mit einem flachen, länglichen Querschnitt ist, wobei die erste und die zweite Elektrode (4, 6) die flache Ober- und die Unterseite abbildenden Abbildungsflächen (13, 15) und die dritte und gegebenenfalls die vierte Elektrode (5, 7) den einen kleinen Radius aufweisenden Kantenbereich abbildende Abbildungsflächen (14, 16) aufweisen.

5. Vorrichtung nach einem der vorangehenden Ansprüche, **dadurch gekennzeichnet, dass** bei drei Elektroden (4, 5, 6) die beiden äußeren Elektroden (4, 6) an einem den Fluidkanal (12) begrenzenden, positionsfesten Kanalbauteil (21) entlang gleiten.

6. Vorrichtung nach einem der Ansprüche 1 bis 4, **dadurch gekennzeichnet, dass** bei vier Elektroden (4, 5, 6, 7) zwei einander gegenüberliegende Elektroden (5, 7) die beiden anderen Elektroden (4, 6) übergreifen.

7. Vorrichtung nach einem der vorangehenden Ansprüche, **dadurch gekennzeichnet, dass** die Bewegungsachsen (8, 9, 10, 11) der Linearantriebseinheiten (26, 27, 28, 29) zweier benachbarter Elektroden (4, 5, 6, 7) unter einem Winkel von 90° zueinander stehen.

8. Vorrichtung nach einem der Ansprüche 1 bis 6, **dadurch gekennzeichnet, dass** die Bewegungsachsen (8, 9, 10, 11) der Linearantriebseinheiten (26, 27, 28, 29) zweier benachbarter Elektroden (4, 5, 6, 7) unter einem Winkel kleiner oder größer 90° zueinander stehen.

9. Vorrichtung nach einem der vorangehenden Ansprüche, **dadurch gekennzeichnet, dass** die Linearantriebseinheiten (26, 27, 28, 29) zur Verstellung des Winkels zwischen den Bewegungsachsen (8, 9, 10, 11) zweier benachbarter Linearantriebseinheiten (26, 27, 28, 29) längs einer Kreisbahn (35) bewegbar sind.

10. Vorrichtung nach Anspruch 9, **dadurch gekennzeichnet, dass** jede Linearantriebseinheit (26, 27, 28, 29) über einen Stellmotor (31) längs der Kreisbahn bewegbar ist.

11. Vorrichtung nach einem der vorangehenden Ansprüche, **dadurch gekennzeichnet, dass** jede Linearantriebseinheit (26, 27, 28, 29) eine über den Antriebsmotor (31) antreibbare positionsfeste Gewindespindel (32) und eine auf dieser laufende Mutter (34), die mit einem Elektrodenhalter (33) gekoppelt ist, aufweist, oder dass eine axial bewegbare Gewindespindel (32) mit damit gekoppeltem Elektrodenhalter (33) vorgesehen ist.

12. Vorrichtung nach Anspruch 11, **dadurch gekennzeichnet, dass** jeder Antriebsmotor ein Torquemotor (31) ist.

13. Vorrichtung nach einem der vorangehenden Ansprüche, **dadurch gekennzeichnet, dass** eine Steuerungseinrichtung (44) vorgesehen ist, über die der Betrieb der Vorrichtung (1) derart steuerbar ist, dass die Elektroden (4, 5, 6, 7) ausgehend von der Ausgangsposition zunächst in einem ersten Betriebsmodus mit permanent anliegendem Strom und permanent anliegender Spannung in Richtung des Werkstücks (2) bewegbar sind und nach Erreichen einer definierten Zwischenposition in einem zweiten Betriebsmodus intermittierend in einem Pulsbetrieb abwechselnd zum und vom Werkstück (2) mit gepulster Spannung und gepulst anliegendem Strom bis in die Endposition bewegbar sind.

14. Vorrichtung nach Anspruch 13, **dadurch gekennzeichnet, dass** jeder Elektrode (4, 5, 6, 7) eine mit der Steuerungseinrichtung (44) kommunizierende Sensoreinrichtung zugeordnet ist, über die die Position der Elektrode (4, 5, 6, 7) erfassbar ist, wobei die Steuerungseinrichtung (44) den Betrieb in Abhängigkeit der Sensorerfassung steuert.

15. Vorrichtung nach einem der vorangehenden Ansprüche, **dadurch gekennzeichnet, dass** eine Positioniereinrichtung (39) zum automatischen Positionieren des Werkstücks (2) in der Arbeitsposition in einer Arbeitskammer (25) vorgesehen ist.

16. Vorrichtung nach Anspruch 15, **dadurch gekennzeichnet, dass** die Positioniereinrichtung (39) eine linear bewegbare Spindel mit einer Aufnahmeeinrichtung zum Haltern des Werkstücks (2) aufweist.

17. Vorrichtung nach Anspruch 16, **dadurch gekennzeichnet, dass** die Spindel während der Verbringung des Werkstücks (2) in die Arbeitsposition und/oder während sich das Werkstück (2) in der Arbeitsposition befindet um ihre Längsachse drehbar ist.

18. Vorrichtung nach einem der Ansprüche 15 bis 17, **dadurch gekennzeichnet, dass** ein der Positioniereinrichtung (39) zugeordnetes Magazin (40) vorgesehen ist, in dem mehrere zu bearbeitende Werkstücke (2) einbringbar sind, die über die Positioniereinrichtung (39) oder eine Wechseleinrichtung (41) automatisch entnehmbar sind.

19. Vorrichtung nach Anspruch 18, **dadurch gekennzeichnet, dass** jedes Werkstück (2) in einem Werkstückhalter (37), der über die Positioniereinrichtung (39) oder die Wechseleinrichtung (41) greifbar ist, aufgenommen ist.

20. Verfahren zur elektrochemischen Bearbeitung eines Werkstücks unter Verwendung einer Vorrichtung nach einem der vorangehenden Ansprüche, **dadurch gekennzeichnet, dass** die Elektroden während der Bearbeitung von der Ausgangsposition in Richtung des Werkstücks in die Endposition bewegt werden und gleichzeitig ein Fluid durch den radial über die Abbildungsflächen begrenzten Fluidkanal zwischen dem Werkstück und den Elektroden gepumpt wird.

21. Verfahren nach Anspruch 20, **dadurch gekennzeichnet, dass** die Steuerungseinrichtung den Betrieb der Vorrichtung derart steuert, dass die Elektroden ausgehend von der Ausgangsposition zunächst in einem ersten Betriebsmodus mit permanent anliegendem Strom und permanent anliegender Spannung in Richtung des Werkstücks bewegt werden und nach Erreichen einer definierten Zwischenposition in einem zweiten Betriebsmodus intermittierend in einem Pulsbetrieb abwechselnd zum und vom Werkstück mit gepulst anliegendem Strom und gepulst anliegender Spannung bis in die Endposition bewegt werden.

## Claims

1. Device for the electrochemical processing of a metal workpiece, comprising a plurality of electrodes that by way of respective linear drive units are movable in a linear manner relative to the workpiece from an initial position to a terminal position, said electrodes having reproduction faces that are directed toward the workpiece, wherein at least three electrodes (4, 5, 6, 7) are provided, said electrodes (4, 5, 6, 7) being disposed so as to be offset around the circumference of the workpiece (2) and by way of the reproduction faces (13, 14, 15, 16) of said electrodes (4, 5, 6, 7) delimiting a fluid duct (12) that in a closed manner encircles the circumference of the workpiece (2), **characterized in that** adjacent electrodes (4, 5, 6, 7) during the entire readjustment movement from the initial position to the terminal position are in peripheral contact and engage across one another in portions, wherein an electrode (5, 7) that is provided between two electrodes (4, 6) on the reproduction face (14, 16) has two sliding faces (17, 18) by way of which said electrode (5, 7) slides on respective outer sliding faces (19, 20) of the two adjacent electrodes (4, 6) .

2. Device according to Claim 1, **characterized in that** two mutually opposite electrodes (4, 6) have reproduction faces (13, 15) reproducing the upper and lower side of the workpiece (2), while the at least one third electrode (5), disposed between said two mutually opposite electrodes (4, 6), has a reproduction face (14) that preferably reproduces the edge region of the workpiece (2).

3. Device according to Claim 1 or 2, **characterized in that** a fourth electrode (7), disposed opposite the third electrode (5), is provided, said fourth electrode (7) preferably likewise having a reproduction face (16) that reproduces the edge region of the workpiece (2).

4. Device according to Claim 2 or 3, **characterized in that** the workpiece (2) is a vane component of a turbomachine, having a vane portion with a flat, elongate cross section, wherein the first and the second electrode (4, 6) have reproduction faces (13, 15) reproducing the flat upper and the lower side, and the third and optionally the fourth electrode (5, 7) have reproduction faces (14, 16) reproducing the edge region having a small radius.

5. Device according to one of the preceding claims, **characterized in that** in the case of three electrodes (4, 5, 6) the two outer electrodes (4, 6) slide along a positionally fixed duct component (21) that delimits the fluid duct (12).

6. Device according to one of Claims 1 to 4, **characterized in that** in the case of four electrodes (4, 5, 6, 7) two mutually opposite electrodes (5, 7) engage across the two other electrodes (4, 6).

7. Device according to one of the preceding claims, **characterized in that** the motion axes (8, 9, 10, 11) of the linear drive units (26, 27, 28, 29) of two adjacent electrodes (4, 5, 6, 7) are set at a mutual angle of 90°.

8. Device according to one of Claims 1 to 6, **characterized in that** the motion axes (8, 9, 10, 11) of the linear drive units (26, 27, 28, 29) of two adjacent electrodes (4, 5, 6, 7) are set at a mutual angle of smaller than or larger than 90°.

9. Device according to one of the preceding claims, **characterized in that** the linear drive units (26, 27, 28, 29) for readjusting the angle between the motion axes (8, 9, 10, 11) of two adjacent linear drive units (26, 27, 28, 29) are movable along a circular path (35).

10. Device according to Claim 9, **characterized in that** each linear drive unit (26, 27, 28, 29) by way of an actuator motor (31) is movable along the circular path.

11. Device according to one of the preceding claims, **characterized in that** each linear drive unit (26, 27, 28, 29) has a positionally fixed threaded spindle (32) that is drivable by way of the drive motor (31), and a nut (34) which runs on said threaded spindle (32) and is coupled to an electrode holder (33), or **in that** an axially movable threaded spindle (32) having an electrode holder (33) coupled thereto is provided.

12. Device according to Claim 11, **characterized in that** each drive motor is a torque motor (31).

13. Device according to one of the preceding claims, **characterized in that** a control installation (44) is provided, the operation of the device (1) by way of said control installation (44) being controllable in such a manner that the electrodes (4, 5, 6, 7), firstly, proceeding from the initial position, in a first operating mode having a permanently applied current and a permanently applied voltage are movable in the direction of the workpiece (2) and after reaching a defined intermediate position, in a second operating mode in a pulsed operation, are movable in an intermittent manner, at a pulsed voltage and a current that is applied in a pulsed manner, so as to alternate toward and away from the workpiece (2) up to the terminal position.

14. Device according to Claim 13, **characterized in that** each electrode (4, 5, 6, 7) is assigned a sensor installation that communicates with the control installation (44), the position of the electrode (4, 5, 6, 7) being detectable by way of said sensor installation, wherein the control installation (44) controls the operation so as to depend on the sensor detection.

15. Device according one of the preceding claims, **characterized in that** a positioning installation (39) for automatically positioning the workpiece (2) in the operating position in an operating chamber (25) is provided.

16. Device according to Claim 15, **characterized in that** the positioning installation (39) has a spindle that is movable in a linear manner, having a receptacle installation for mounting the workpiece (2).

17. Device according to Claim 16, **characterized in that** the spindle is rotatable about the longitudinal axis thereof during the transfer of the workpiece (2) to the operating position and/or while the workpiece (2) is located in the operating position.

18. Device according to one of Claims 15 to 17, **characterized in that** a magazine (40) that is assigned to the positioning installation (39) is provided, a plurality of workpieces (2) to be processed being introducible into said magazine (40), said workpieces (2) being automatically retrievable by way of the positioning installation (39) or a changeover installation (41).

19. Device according to Claim 18, **characterized in that** each workpiece (2) is received in a workpiece holder (37) which is acquirable by way of the positioning installation (39) or the changeover installation (41) .

20. Method for the electrochemical processing of a workpiece while using a device according to one of the preceding claims, **characterized in that** the electrodes during the processing are moved from the initial position in the direction of the workpiece to the terminal position, and a fluid is simultaneously pumped through the fluid duct between the workpiece and the electrodes, said fluid duct being radially delimited by the reproduction faces.

21. Method according to Claim 20, **characterized in that** the control installation controls the operation of the device in such a manner that the electrodes, firstly, proceeding from the initial position, in a first operating mode having a permanently applied current and a permanently applied voltage are moved in the direction of the workpiece and after reaching a defined intermediate position, in a second operating mode in a pulsed operation, are moved in an intermittent manner, at a current that is applied in a pulsed manner and a voltage that is applied in a pulsed manner, so as to alternate toward and away from the workpiece up to the terminal position.

## Revendications

1. Dispositif de traitement électrochimique d'une pièce métallique, ledit dispositif comprenant une pluralité d'électrodes qui peuvent être déplacées linéairement par rapport à la pièce d'une position initiale à une position finale par le biais d'unités d'entraînement linéaire respectives et qui comportent une surface de reproduction dirigée vers la pièce,
au moins trois électrodes (4, 5, 6, 7) étant prévues, qui sont disposées de manière décalée sur la circonférence de la pièce (2) et les électrodes (4, 5, 6, 7) délimitant avec leurs surfaces de reproduction (13, 14 , 15, 16) un canal de fluide (12) qui s'étend de manière fermée sur la circonférence de la pièce (2), **caractérisé en ce que** des électrodes adjacentes (4, 5, 6, 7) se touchent au niveau des bords et se chevauchent par portions pendant tout le déplacement de la position initiale à la position finale,
une électrode (5, 7) prévue entre deux électrodes (4, 6) comportant au niveau de la surface de reproduction (14, 16) deux surfaces de glissement (17, 18) qui lui permettent de glisser sur des surfaces de glissement extérieures respectives (19, 20) des deux électrodes adjacentes (4, 6).

2. Dispositif selon la revendication 1, **caractérisé en ce que** deux électrodes (4, 6), opposées l'une à l'autre, comportent des surfaces de reproduction (13, 15) qui reproduisent le côté supérieur et le côté inférieur de la pièce (2), tandis que l'au moins une troisième électrode (5) comporte une surface de reproduction (14) qui reproduit de préférence la zone de bord de la pièce (2).

3. Dispositif selon la revendication 1 ou 2, **caractérisé en ce qu'**une quatrième électrode (7) est prévue qui est disposée en face de la troisième électrode (5) et qui comporte de préférence également une surface de reproduction (16) qui reproduit la zone de bord de la pièce (2).

4. Dispositif selon la revendication 2 ou 3, **caractérisé en ce que** la pièce (2) est un composant à aube d'une turbomachine qui est pourvu d'une portion formant aube de section transversale plane et allongée, la première et la deuxième électrode (4, 6) comportant des surfaces de reproduction (13, 15) qui reproduisent les côté supérieur et côté inférieure plans et la troisième et éventuellement la quatrième électrode (5, 7) comportant des surfaces de reproduction (14, 16) qui reproduisent la zone de bord qui a un petit rayon.

5. Dispositif selon l'une des revendications précédentes, **caractérisé en ce que**, dans le cas de trois électrodes (4, 5, 6), les deux électrodes extérieures (4, 6) glissent le long d'un composant de canal fixe (21) qui délimite le canal de fluide (12).

6. Dispositif selon l'une des revendications 1 à 4, **caractérisé en ce que**, dans le cas de quatre électrodes (4, 5, 6, 7), deux électrodes (5, 7), opposées l'une à l'autre, chevauchent les deux autres électrodes (4, 6).

7. Dispositif selon l'une des revendications précédentes, **caractérisé en ce que** les axes de déplacement (8, 9, 10, 11) des unités d'entraînement linéaire (26, 27, 28, 29) de deux électrodes adjacentes (4, 5, 6, 7) forment un angle de 90° l'un par rapport à l'autre.

8. Dispositif selon l'une des revendications 1 à 6, **caractérisé en ce que** les axes de déplacement (8, 9, 10, 11) des unités d'entraînement linéaire (26, 27, 28, 29) de deux électrodes adjacentes (4, 5, 6, 7) forment un angle inférieur ou supérieur à 90° l'un par rapport à l'autre.

9. Dispositif selon l'une des revendications précédentes, **caractérisé en ce que** les unités d'entraînement linéaire (26, 27, 28, 29) peuvent être déplacées le long d'une trajectoire circulaire (35) afin de régler l'angle entre les axes de déplacement (8, 9, 10, 11) de deux unités d'entraînement linéaire adjacentes (26, 27, 28, 29).

10. Dispositif selon la revendication 9, **caractérisé en ce que** chaque unité d'entraînement linéaire (26, 27, 28, 29) peut être déplacée le long de la trajectoire circulaire par le biais d'un servomoteur (31).

11. Dispositif selon l'une des revendications précédentes, **caractérisé en ce que** chaque unité d'entraînement linéaire (26, 27, 28, 29) comporte une broche filetée fixe (32) qui peut être entraînée par le biais du moteur d'entraînement (31) et un écrou (34) qui court sur ladite broche filetée et qui est accouplé à un porte-électrode (33), ou **en ce qu'**une broche filetée (32), mobile axialement, est prévue à laquelle est accouplé un porte-électrode (33).

12. Dispositif selon la revendication 11, **caractérisé en ce que** chaque moteur d'entraînement est un moteur couple (31).

13. Dispositif selon l'une des revendications précédentes, **caractérisé en ce qu'**un module de commande (44) est prévu qui permet de commander le fonctionnement du dispositif (1) de manière à ce que les électrodes (4, 5, 6, 7) puissent être déplacées en direction de la pièce (2) à partir de la position initiale se trouvant d'abord dans un premier mode de fonctionnement dans lequel un courant est appliqué en permanence et une tension est appliquée en permanence et, après avoir atteint une position intermédiaire définie, puissent être déplacées jusqu'à la position finale dans un deuxième mode de fonctionnement par intermittence en fonctionnement pulsé alternativement vers et depuis la pièce (2) avec une tension pulsée et un courant pulsé.

14. Dispositif selon la revendication 13, **caractérisé en ce que** chaque électrode (4, 5, 6, 7) est associée à un module formant capteur qui communique avec le module de commande (44) et qui permet de détecter la position de l'électrode (4, 5, 6, 7), le module de commande (44) commandant le fonctionnement en fonction de la détection faite par le capteur.

15. Dispositif selon l'une des revendications précédentes, **caractérisé en ce qu'**un module de positionnement (39) est prévu pour positionner automatiquement la pièce (2) en position de travail dans une chambre de travail (25).

16. Dispositif selon la revendication 15, **caractérisé en ce que** le module de positionnement (39) comporte une broche mobile linéairement qui est pourvue d'un module de réception destiné à maintenir la pièce (2).

17. Dispositif selon la revendication 16, **caractérisé en ce que** la broche peut être entraînée en rotation sur son axe longitudinal pendant le déplacement de la pièce (2) jusque dans la position de travail et/ou pendant que la pièce (2) est dans la position de travail.

18. Dispositif selon l'une des revendications 15 à 17, **caractérisé en ce qu'**un magasin (40) est prévu qui est associé au module de positionnement (39) et dans lequel peuvent être introduites plusieurs pièces à traiter (2) qui peuvent être retirées automatiquement par le biais du module de positionnement (39) ou d'un module de remplacement (41).

19. Dispositif selon la revendication 18, **caractérisé en ce que** chaque pièce (2) est reçue dans un porte-pièce (37) qui peut être saisi par le biais du module de positionnement (39) ou du module de remplacement (41) .

20. Procédé de traitement électrochimique d'une pièce à l'aide d'un dispositif selon l'une des revendications précédentes, **caractérisé en ce que**, pendant le traitement, les électrodes sont déplacées de la position initiale en direction de la pièce jusqu'à la position finale et en même temps un fluide est pompé par un canal de fluide délimité radialement par les surfaces de reproduction et passant entre la pièce et les électrodes.

21. Procédé selon la revendication 20, **caractérisé en ce que** le module de commande commande le fonctionnement du dispositif de manière à ce que les électrodes (4, 5, 6, 7) puissent être déplacées en direction de la pièce (2) à partir de la position initiale se trouvant d'abord dans un premier mode de fonctionnement dans lequel un courant est appliqué en permanence et une tension est appliquée en permanence et, après avoir atteint une position intermédiaire définie, puissent être déplacées jusqu'à la position finale dans un deuxième mode de fonctionnement par intermittence en fonctionnement pulsé alternativement vers et depuis la pièce avec une tension pulsée et un courant pulsé.
